# EUROPÄISCHE PATENTSCHRIFT

(11) **EP 4 130 520 B1**
(45) Veröffentlichungstag und Bekanntmachung des Hinweises auf die Patenterteilung: **28.08.2024**
(21) Anmeldenummer: 22186194.1
(22) Anmeldetag: 21.07.2022
(51) Int. Cl.: F16J 15/3208, F16J 15/56, F16J 15/16

(54) **DICHTUNG UND DICHTUNGSANORDNUNG, DIE EINE SOLCHE DICHTUNG UMFASST**
SEAL AND SEAL ARRANGEMENT COMPRISING SUCH A SEAL
JOINT D'ÉTANCHÉITÉ ET ENSEMBLE JOINT D'ÉTANCHÉITÉ COMPRENANT UN TEL JOINT D'ÉTANCHÉITÉ

(30) Priorität: 04.08.2021 DE 102021120311
(43) Veröffentlichungstag der Anmeldung: 08.02.2023
(73) Patentinhaber: Carl Freudenberg KG, 69469 Weinheim (DE)
(72) Erfinder: Fietz, Roland, 35279 Neustadt-Momberg (DE); Barillas, Gonzalo, 36304 Alsfeld-Altenburg (DE); Jäckel, Jürgen, 34637 Schrecksbach (DE); Grösch, Michael, 36304 Alsfeld-Berfa (DE)

(56) Entgegenhaltungen:
- EP-A1- 3 121 490
- WO-A1-2020/120874
- US-A1- 2012 091 664

## Beschreibung

### Technisches Gebiet

Die Erfindung betrifft eine Dichtung und eine Dichtungsanordnung, die eine solche Dichtung umfasst.

Die Dichtung umfasst einen Dichtring aus einem elastischen Kunststoff und zumindest einen Vorspannring aus einem gummielastischen Werkstoff, wobei der Dichtring und der Vorspannring konzentrisch zueinander angeordnet sind, sich mit ihren in radialer Richtung einander zugewandten Umfangsseiten anliegend berühren und in axialer Richtung beiderseits jeweils eine Stirnseite aufweisen, die während der bestimmungsgemäßen Verwendung der Dichtung als Hoch- oder Niederdruckseite und als Nieder- oder Hochdruckseite ausgebildet sind und wobei der Dichtring zumindest einen sich zwischen seinen Stirnseiten im Wesentlichen in axialer Richtung erstreckenden Druckentlastungskanal aufweist, der durch einen differenzdruckbetätigbaren Ventilkörper differenzdruckabhängig in Offen- oder Geschlossenstellung bringbar ist.

In der Dichtungsanordnung ist die Dichtung in radialer Richtung zwischen zwei konzentrisch zueinander angeordneten und translatorisch zueinander beweglichen Maschinenelementen angeordnet, wobei das erste Maschinenelement eine Einbaunut für die Dichtung umfasst, mit einem Nutgrund und wobei der Vorspannring unter radialer elastischer Vorspannung zwischen dem Nutgrund und dem Dichtring angeordnet ist.

### Stand der Technik

Eine solche Dichtung und eine solche Dichtungsanordnung sind jeweils allgemein bekannt und kommen zum Beispiel in Hydraulikzylindern zur Anwendung. Die Dichtung kann radial innendichtend zur Abdichtung einer Kolbenstange oder radial außendichtend zur Abdichtung eines Kolbens gegenüber einem Gehäuse ausgebildet sein.

Die Dichtung ist zweiteilig ausgebildet. Der Dichtring besteht zum Beispiel aus einem PTFE-Werkstoff, der Vorspannring für den Dichtring zum Beispiel aus einem gummielastischen O-Ring.

Je nach Anwendungsfall kann eine solche Dichtung als Primärdichtung oder Sekundärdichtung eingesetzt werden.

Als Primärdichtung wird die Dichtung bezeichnet, wenn sie als erste Dichtung benachbart zu einem Zylinderraum-Druckraum angeordnet ist. Die Primärdichtung dient vor allem dazu, hohe Drücke und Druckspitzen abzufangen und eine zur Anwendung gelangende Sekundärdichtung, die auf der dem Zylinderraum-Druckraum axial abgewandten Seite der Primärdichtung angeordnet ist, zu entlasten und zu schützen. Die Sekundärdichtung hat hauptsächlich die Aufgabe, Leckagen in die Umgebung zu verhindern.

Für manche Anwendungsfälle, zum Beispiel für den Einsatz als Primärdichtung, ist eine Druckentlastungsfunktion wichtig, da zwischen der Primär- und einer Sekundärdichtung während der bestimmungsgemäßen Verwendung der Dichtung ein unerwünschter Zwischendruck aufgebaut werden kann, der in Richtung eines abzudichtenden Raums wieder abgebaut werden muss.

Ansonsten könnten Schädigungen der Dichtkomponenten und/oder unerwünscht hohe Reib- und Verschiebekräfte entstehen.

Eine Dichtung und eine Dichtungsanordnung, jeweils wie eingangs beschrieben, sind aus der EP 3 121 490 A1 bekannt. Der Dichtring ist, in radialer Richtung etwa mittig, von einer Bohrung durchdrungen, die sich zwischen den beiden Stirnseiten erstreckt. In axialer Richtung mittig des Dichtrings ist eine umfangsseitig umlaufende Nut angeordnet, die sich in radialer Richtung bis in die Bohrung erstreckt. In der Nut ist ein als O-Ring ausgebildeter Ventilkörper angeordnet, der differenzdruckbetätigbar ist. Die Bohrung ist als Druckentlastungskanal ausgebildet und durch den O-Ring bedarfsweise in Offen- oder Geschlossenstellung bringbar, um einen unerwünscht hohen Überdruck und damit eine Beschädigung oder Zerstörung des Dichtungssystems zu verhindern.

Eine weitere Dichtung und eine weitere Dichtungsanordnung sind aus der WO 2020/120874 A1 bekannt. Die Dichtung umfasst einen Dichtring aus elastischem Kunststoff und einen Vorspannring aus einem gummielastischen Werkstoff, wobei der Dichtring und der Vorspannring konzentrisch zueinander angeordnet sind. Der Dichtring und der Vorspannring berühren sich mit ihren in radialer Richtung einander zugewandten Umfangsseiten anliegend und weisen in axialer Richtung beiderseits jeweils eine Stirnseite auf, die während der bestimmungsgemäßen Verwendung der Dichtung als Hoch- oder Niederdruckseite und als Nieder- oder Hochdruckseite ausgebildet ist.

Der Dichtring weist einen sich in axialer Richtung erstreckenden Druckentlastungskanal auf, der differenzdruckabhängig in Offen- oder Geschlossenstellung bringbar ist.

Auf der dem Vorspannring radial abgewandten Seite erstreckt sich eine Dichtlippe von einer Stirnseite bis zu einer etwa axial mittig des Dichtrings angeordneten Nut, die in Richtung eines abzudichtenden, translatorisch hin- und herbeweglichen Maschinenelements offen ist. Auf der der Dichtlippe axial abgewandten Seite der Nut ist der Druckentlastungskanal vorgesehen, der sich in axialer Richtung erstreckt und axial einerseits in die Nut mündet und sich in axialer Richtung andererseits bis in die entsprechende Stirnseite des Dichtrings erstreckt.

Die Dichtung ist innerhalb ihres Einbauraums differenzdruckabhängig in axialer Richtung verschiebbar. Abhängig vom Differenzdruck liegen der Dichtring und der Vorspannring in axialer Richtung einerseits an einer ersten Begrenzungswand des Einbauraums dichtend an, wobei der Druckentlastungskanal in diesem Betriebszustand vom abzudichtenden Medium durchströmbar ist.

Bei einer Druckumkehr bewegt sich die Dichtung axial in entgegengesetzter Richtung innerhalb des Einbauraums. Dabei legt sich die Stirnseite des Dichtrings an einer zweiten Begrenzungswandung des Einbauraums an, und der Strömungseinlas in den Druckentlastungskanal ist dadurch verschlossen. Die Durchströmbarkeit des Druckentlastungskanals ist also davon abhängig, wo, in axialer Richtung betrachtet, die Dichtung innerhalb ihres Einbauraums angeordnet ist. Einen Ventilkörper zum Öffnen oder Verschließen des Druckentlastungskanal weist der Dichtring nicht auf.

Eine weitere Dichtungsanordnung ist aus der US 2012/0091664 A1 bekannt. Die Dichtungsanordnung umfasst einen Dichtring, der in einem Gehäuse angeordnet ist. Der Dichtring hat mehrere Dichtlippen, wobei der Dichtring und das Gehäuse im Wesentlichen kongruent zueinander gestaltet sind.

Aus der WO 2007/131468 A1 ist eine Dichtung mit Druckentlastung bekannt. Die Druckentlastung wird durch Strukturen im Dichtring bewirkt, wie sich in axialer Richtung erstreckende Druckentlastungsnuten und -kanäle am Außenumfang des Dichtrings. Während der bestimmungsgemäßen Verwendung der Dichtung, insbesondere bei Abdichtung höherer Drücke, können die Strukturen am Außenumfang des Dichtrings zu Beschädigungen des vergleichsweise weicheren Vorspannrings führen, weil der Vorspannring bei jedem Druckaufbau in die Strukturen hineingedrückt wird, was mit zunehmender Gebrauchsdauer zu zunehmenden Erosionserscheinungen am Vorspannring führt.

Aus der WO 2007/131468 A1, der DE 3 620 539 C2 und der US 7 083 170 sind weitere Dichtungen mit Druckentlastungen bekannt, wobei die Druckentlastungen jeweils durch Druckentlastungsbohrungen bewirkt werden, die sich durch den Dichtring hindurch erstrecken. Bohrungen sind teuer in der Herstellung und sind während der bestimmungsgemäßen Verwendung der Dichtung häufig nicht dauerhaft offen zu halten, zum Beispiel deshalb, weil sich während der Herstellung ein Grad an den jeweiligen Enden der Bohrung bildet oder weil sich der Werkstoff, aus dem der Dichtring besteht, plastisch verformt.

### Darstellung der Erfindung

Der Erfindung liegt die Aufgabe zugrunde, eine Dichtung der eingangs genannten Art derart weiterzuentwickeln, dass diese einfach und kostengünstig herstellbar ist und gute Gebrauchseigenschaften während einer langen Gebrauchsdauer aufweist. Insbesondere soll eine zuverlässige Druckentlastung während der gesamten Gebrauchsdauer gewährleistet sein.

Diese Aufgabe wird erfindungsgemäß durch die Merkmale der Ansprüche 1 und 11 gelöst. Auf vorteilhafte Ausgestaltungen nehmen die darauf jeweils direkt oder indirekt rückbezogenen Ansprüche Bezug.

Zur Lösung der Aufgabe ist es vorgesehen, dass der Ventilkörper durch eine in radialer Richtung schwenkbeweglich um eine Anlenkung mit dem Dichtring verbundenen Dichtlippe gebildet ist.

Hierbei ist von Vorteil, dass der Ventilkörper differenzdruckabhängig schaltbar ist und dadurch den Druckentlastungskanal technisch besonders einfach bedarfsweise öffnet oder schließt.

Der Dichtring, die Anlenkung und die Ventillippe sind bevorzug einstückig ineinander übergehend und materialeinheitlich ausgebildet. Hierbei ist von Vorteil, dass die Dichtung insgesamt einen besonders einfachen und teilarmen Aufbau aufweist und einfach und kostengünstig herstellbar ist. Die Dichtung kann aus nur zwei Teilen bestehen, nämlich aus einem Dichtring und einem Vorspannring, wobei die Ventillippe und die Anlenkung einen integralen Bestandteil des Dichtrings bilden.

Separat herzustellender und zu montierender Ventilkörper zur Schaltung des Druckentlastungskanals bedarf es daher nicht, ebenso wenig wie separat herzustellender und zu montierender Stellelemente zur Betätigung des Ventilkörpers.

Der Dichtring, die Anlenkung und die Ventillippe können in einem Arbeitsgang gemeinsam spritzgegossen und vollautomatisch und "fertigfallend" aus einer entsprechenden Spritzgussform entformt werden.

Der Werkstoff, aus dem der Dichtring besteht, kann ein TPE-Werkstoff sein, bevorzugt ein thermoplastisches Polyurethan höherer Härte. Die Härte beträgt bevorzugt mehr als 90 Shore A und mehr als 40 Shore D.

Auch technische Konstruktionskunststoffe, die in der Regel unverstärkt sind, können zur Herstellung des Dichtrings zur Anwendung gelangen, zum Beispiel PK, POM, PA.

Ein Dichtring aus einem TPE-Werkstoff hat den Vorteil, dass durch das elastomere Verhalten des Werkstoffs eine hohe Dichtwirkung sowohl an der Dichtkante als auch an der Ventillippe erreicht wird und durch den, verglichen mit technischen Konstruktionskunststoffen, geringeren E-Modul entsprechend niedrigere Montagekräfte benötigt werden.

Demgegenüber hat ein Dichtring aus einem der zuvor genannten technischen Konstruktionskunststoffe den Vorteil, dass durch den, verglichen mit TPE-Werkstoffen, höheren E-Modul Spaltextrusion vorteilhaft reduziert werden kann. Somit kann diese Variante höheren Drücken standhalten.

Besonders gut lassen sich die Gebrauchseigenschaften an den jeweiligen Anwendungsfall anpassen, wenn eine Kombination von technischen Konstruktionskunststoffen und TPE, also ein sogenannter Compound, zur Anwendung gelangt. Zum Beispiel eine Kombination von PK und TPU.

Die Ventillippe kann im Wesentlichen axial mittig auf der dem Vorspannring radial zugewandten Seite des Dichtrings angelenkt sein.

Die Funktion des Dichtrings in der Dichtungsanordnung wird später anhand der Figuren noch konkret beschrieben.

Generell kann sich die Dichtung in einer Dichtungsanordnung, in der sie zur Anwendung gelangt, innerhalb ihres Einbauraums differenzdruckabhängig in axialer Richtung hin und her bewegen.

Gelangt die Dichtung zum Beispiel zur Abdichtung eines unter einem relativen Überdruck stehenden Raums als Primärdichtung zur Anwendung, ist auf der dem abzudichtenden Raum axial abgewandten Seite der erfindungsgemäßen Dichtung eine Sekundärdichtung, beispielsweise in Form eines üblichen Nutrings angeordnet. In axialer Richtung zwischen der (Primär-) Dichtung und der Sekundärdichtung befindet sich ein Zwischenraum, in dem sich während der bestimmungsgemäßen Verwendung der Dichtung abzudichtendes Medium sammeln kann und von der Sekundärdichtung an einem Austritt in die Umgebung gehindert wird.

Im Zwischenraum kann während der bestimmungsgemäßen Verwendung der Dichtung/der Dichtungsanordnung ein relativer Überdruck entstehen, wenn zum Beispiel eine abzudichtende Kolbenstange, bezogen auf den Zylinder, in dem sie mit einem Kolben angeordnet ist, aus- oder einfährt.

Der abzudichtende Raum ist der Raum in einem Zylinder, in dem sich der Kolben mit der Kolbenstange axial hin und her bewegt.

Um zu verhindern, dass im Zwischenraum der Überdruck zu groß und die Dichtungen dadurch beschädigt/unerwünscht verlagert werden, muss der relative Überdruck aus dem Zwischenraum, bei entsprechenden Druckverhältnissen im abzudichtenden Raum, in diesen hinein möglichst wieder ausgeglichen werden.

Für einen Druckausgleich wird die Dichtung innerhalb ihres Einbauraums differenzdruckabhängig in axialer Richtung derart verlagert, dass der als Ventillippe ausgebildete Ventilkörper den Druckentlastungskanal im Dichtring freigibt und dadurch der relative Überdruck aus dem Zwischenraum durch den Druckentlastungskanal hindurch in den eigentlich abzudichtenden Raum relativ geringeren Drucks ausgeglichen wird.

Kehren sich während der bestimmungsgemäßen Verwendung der Dichtungsanordnung anschließend die Druckverhältnisse wieder um, besteht im abzudichtenden Raum anschließend also wieder ein relativer Überdruck, der höher ist als der Druck im Zwischenraum, wird der Dichtring in entgegengesetzter axialer Richtung innerhalb seines Einbauraums bewegt und die Ventillippe dadurch mittels des Vorspannrings in Geschlossenstellung bewegt. Der Druckentlastungskanal ist dadurch wieder verschlossen, und das abzudichtende Medium wird an einem Austritt aus dem abzudichtenden Raum in den Zwischenraum/die Umgebung gehindert.

Durch die im Wesentlichen axial mittig auf der dem Vorspannring radial zugewandten Seite des Dichtrings angelenkte Ventillippe wird erreicht, dass die Ventillippe nach Art eines Rückschlagventils funktioniert. Sie gibt den Druckentlastungskanal nur dann zur Druckentlastung des Zwischentraums frei, wenn der Druck im Zwischenraum höher als im abzudichtenden Raum ist. Anderenfalls verschließt die Ventillippe den Druckentlastungskanal dichtend.

Die Ventillippe kann auf der dem Vorspannring radial zugewandten Seite des Dichtrings angeordnet sein, einen Teil der dem Vorspannring radial zugewandten Umfangsseite des Dichtrings bilden, wobei sich die Umfangsseite eben, ohne sprunghafte Richtungsänderungen in Umfangsrichtung und axial von einer zur anderen Stirnseite des Dichtrings erstreckt. Die einander zugewandten Umfangsseiten von Dichtring und Vorspannring, die aufeinander abgestützt sind, sind dadurch glatt im Sinne von "ohne Struktur und ohne Erhöhungen/Vertiefungen". Die Gefahr von Verschleiß und Beschädigungen im Bereich der gegenseitigen Berührung sind deshalb auch während einer langen Gebrauchsdauer auf ein Minimum beschränkt.

Die Ventillippe kann auf der der Umfangsseite des Dichtrings abgewandten Seite den Druckentlastungskanal begrenzen, der durch elastische Verformung der Ventillippe differenzdruckabhängig und mittels des Vorspannrings in Offen- oder Geschlossenstellung bringbar ist.

Verschließt die Ventillippe den Druckentlastungskanal, unterscheidet sich der Dichtring in seiner Funktion und in seinem Aussehen praktisch nicht von einem herkömmlichen Dichtring einer zweiteiligen Dichtung mit Vorspannring ohne Druckentlastung.

Der Druckentlastungskanal wird nur dann freigegeben, wenn sich die Ventillippe radial in Richtung des Vorspannrings hebt und um ihre Anlenkung differenzdruckabhängig soweit geschwenkt wird, dass der Druckentlastungskanal freigegeben wird.

Unabhängig davon, ob die Ventillippe den Druckentlastungskanal freigibt oder verschließt, ist die Umfangsseite des Dichtrings eben und ohne sprunghafte Richtungsänderungen in die Ventillippe übergehend ausgebildet, für eine größtmögliche Schonung des Werkstoffs des Vorspannrings.

Der Druckentlastungskanal kann einen kreisringförmig in sich geschlossen ausgebildeten Einlass und Verbindungskanäle umfassen, wobei der Einlass sich in axialer Richtung von einer Stirnseite des Dichtrings entlang der Ventillippe bis zur Anlenkung erstreckt, wobei der Einlass auf seiner der einlassseitigen Stirnseite axial abgewandten Seite strömungsleitend mit den Verbindungskanälen verbunden ist, die sich im Dichtring in radialer oder axialer Richtung erstrecken und in die axial abgewandte Stirnseite münden.

Sich in axialer Richtung erstreckende Verbindungskanäle haben den Vorteil, dass die Druckentlastung strömungsgünstig direkt ohne Richtungsumkehr innerhalb des Dichtrings in den abzudichtenden Raum abgebaut wird. Außerdem ist von Vorteil, dass sie im Formgebungswerkzeug kostengünstig, zum Beispiel durch Stifte, hergestellt werden können.

Demgegenüber haben sich in radialer Richtung erstreckende Verbindungskanäle den Vorteil, dass dadurch die Druckentlastungsfunktion auch dann gewährleistet bleibt, wenn der Dichtring seinen Einbauraum in axialer Richtung stirnseitig anliegend berührt.

Außerdem ist von Vorteil, dass bei einem extremen Verkippen und Deformieren des Dichtrings, zum Beispiel falls ein extremer Überdruck in einem Zwischenraum anliegt, die Druckentlastungsfunktion erhalten bleibt.

Bevorzugt sind die Verbindungskanäle gleichmäßig in Umfangsrichtung verteilt angeordnet. Dadurch wird die Herstellung des Dichtrings vereinfacht, und die Gefahr einer Verkantung während der bestimmungsgemäßen Verwendung der Dichtung ist minimiert.

Im Druckentlastungskanal zwischen dem Einlass und den Verbindungskanälen kann herstellungsbedingt jeweils eine den Druckentlastungskanal verschließende Berstmembran angeordnet sein, die bei Überschreitung eines Berstdrucks reist und den Druckentlastungskanal freigibt. Bei sehr geringen Differenzdrücken ist der Durchfluss durch den Druckentlastungskanal gesperrt; erst ab einem gewissen Mindest-Differenzdruck, der zum Beispiel 50 bar beträgt, reißt die Berstmembran und gibt den Druckentlastungskanal anschließend frei.

Gemäß einer vorteilhaften Ausgestaltung kann es vorgesehen sein, dass die Ventillippe, auf der der Anlenkung axial abgewandten Seite einen sich in radialer Richtung erstreckenden Zentriervorsprung aufweist, der einem kongruent gestalteten Hinterschnitt des Dichtrings zugeordnet ist. Hierbei ist von Vorteil, dass die Ventillippe, nach dem sie den Druckentlastungskanal freigegeben hat, beim anschließenden Schließen des Druckentlastungskanals zum Dichtring stets wieder korrekt zentriert/positioniert wird. Dadurch wird ein besonders wirkungsvolles, dichtes Verschließen des Druckentlastungskanals bei Druckbeaufschlagung aus dem abzudichtenden Raum erreicht.

Der Vorspannring kann durch einen O-Ring gebildet sein. O-Ringe sind in vielen Größen kostengünstig verfügbare und kostengünstige Bauteile. Sie haben sich als Vorspannringe in zweiteiligen Dichtungen zur radialen Anpressung eines Dichtrings an eine abzudichtende Oberfläche bereits im Stand der Technik gut bewährt.

Alternativ können auch anders gestaltete Vorspannringe zur Anwendung gelangen, beispielsweise Rechteck- oder X-Ringe.

Außerdem betrifft die Erfindung eine Dichtungsanordnung, umfassend zwei konzentrisch zueinander angeordnet und translatorisch zueinander bewegliche erste und zweite Maschinenelemente, wobei in radialer Richtung zwischen den Maschinenelementen eine Dichtung, wie zuvor beschrieben, angeordnet ist, wobei das erste Maschinenelement eine Einbaunut für die Dichtung umfasst, mit einem Nutgrund und wobei der zumindest eine Vorspannring unter radialer elastischer Vorspannung zwischen dem Nutgrund und dem Dichtring angeordnet ist.

Eine solche Dichtungsanordnung hat eine Druckentlastungsfunktion und ist trotzdem ist einfach und kostengünstig herstellbar und weist gleichbleibend gute Gebrauchseigenschaften während einer lange Gebrauchsdauer auf.

In Abhängigkeit vom jeweiligen Anwendungsfall kann es vorgesehen sein, dass das erste Maschinenelement ein Zylindergehäuse und das zweite Maschinenelement eine Kolbenstange eines im Zylindergehäuse translatorisch hin und her beweglichen Kolbens ist. In diesem Fall dichtet der Dichtring radial innenumfangsseitig ab.

In einer anderen Anwendung kann es vorgesehen sein, dass das erste Maschinenelement ein Kolben und das zweite Maschinenelement ein den Kolben außenumfangsseitig umschließendes Zylindergehäuse ist. In diesem Fall dichtet der Dichtring radial außenumfangsseitig ab.

### Kurzbeschreibung der Zeichnung

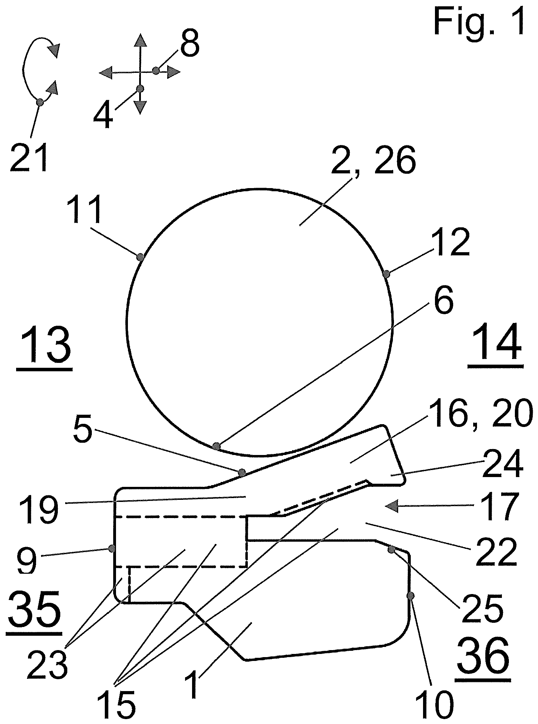

Ein erstes Ausführungsbeispiel der erfindungsgemäßen Dichtung und der erfindungsgemäßen Dichtungsanordnung, die eine solche Dichtung umfasst, sind in den Figuren 1 bis 5 dargestellt.

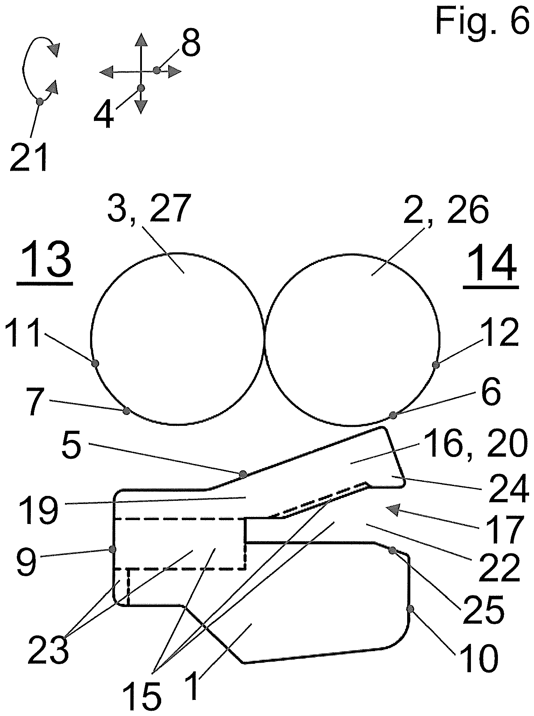

In Figur 6 ist ein zweites Ausführungsbeispiel der erfindungsgemäßen Dichtung gezeigt.

Die Figuren 1 bis 7 zeigen jeweils in schematischer Darstellung:
- Figur 1: ein erstes Ausführungsbeispiel einer Dichtung im herstellungsbedingten, nicht eingebauten Zustand,
- Figur 2: die Dichtung aus Figur 1, im eingebauten Zustand, drucklos,
- Figur 3: ein konkretes Ausführungsbeispiel einer Dichtungsanordnung, in der die Dichtung aus den Figuren 1 und 2 als Primärdichtung zur Anwendung gelangt und radial innendichtend ausgeführt ist,
- Figur 4: die Dichtung aus Figur 2, beaufschlagt mit einem relativen Überdruck aus dem abzudichtenden Raum aus Figur 3,
- Figur 5: die Dichtung aus Figur 2, beaufschlagt mit einem relativen Überdruck aus dem Zwischenraum aus Figur 3,
- Figur 6: ein zweites Ausführungsbeispiel einer Dichtung, ähnlich dem Ausführungsbeispiel aus Figur 1, wobei anstelle von nur einem Vorspannring zwei axial zueinander benachbart angeordnete Vorspannringe zur Anwendung gelangen,
- Figur 7: ein drittes Ausführungsbeispiel, bei dem im Druckentlastungskanal eine Berstmembran angeordnet ist.

### Ausführung der Erfindung

In Figur 1 ist ein erstes Ausführungsbeispiel der erfindungsgemäßen Dichtung gezeigt. Die Dichtung besteht aus zwei Einzelteilen, nämlich dem Dichtring 1 und dem Vorspannring 2.

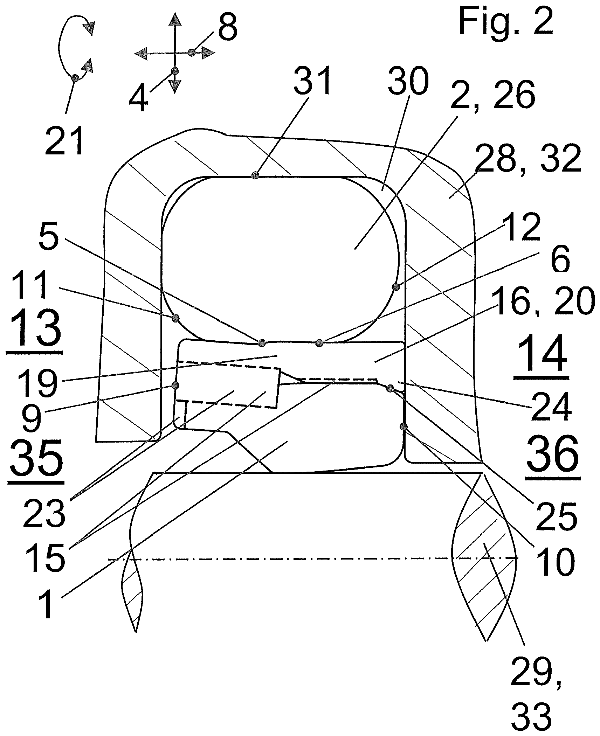

Der Dichtring 1 besteht aus einem elastischen Kunststoff, der Vorspannring 2 demgegenüber aus einem gummielastischen Werkstoff. Der Dichtring 1 und der Vorspannring 2 sind konzentrisch zueinander angeordnet und berühren sich während der bestimmungsgemäßen Verwendung der Dichtung, die in den Figuren 2 bis 5 gezeigt ist, mit ihren einander in radialer Richtung 4 zugewandten Umfangsseiten 5, 6 anliegend.

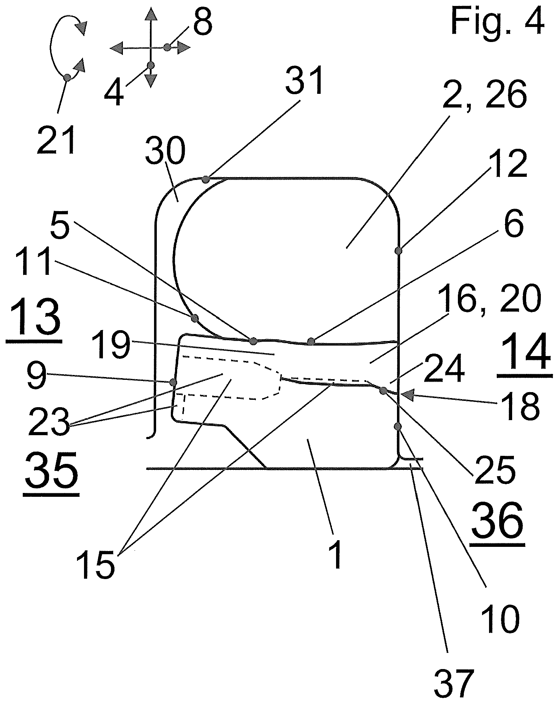

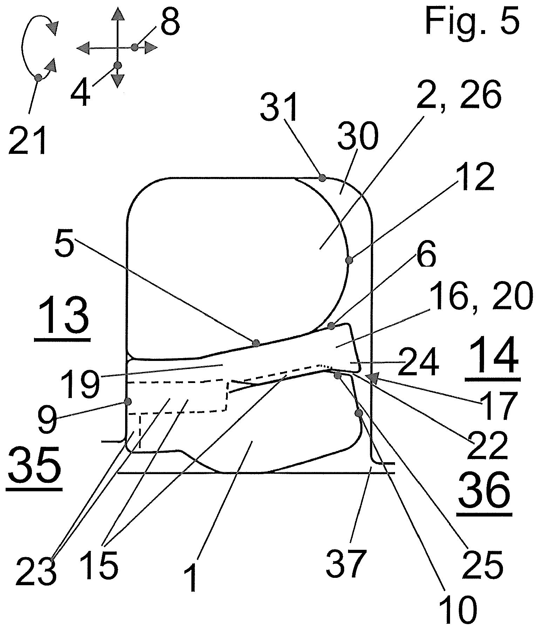

Zwischen den Stirnseiten 9, 10 des Dichtrings 1 erstreckt sich der Druckentlastungskanal 15, der durch den differenzdruckbetätigbaren Ventilkörper 16 differenzdruckabhängig in eine Offenstellung 17, wie in Figur 5 dargestellt, oder eine Geschlossenstellung 18, wie in Figur 4 dargestellt, bringbar ist.

Der Ventilkörper 16 ist als Ventillippe 20 ausgebildet, die schwenkbeweglich um die Anlenkung 19 ausgeführt ist. Der Dichtring 1 ist einstückig ineinander übergehend mit der Ventillippe 20 und deren Anlenkung 19 ausgeführt, so dass die Montage der Dichtung in die Dichtungsanordnung besonders einfach und die Gefahr von Montagefehlern auf ein Minimum begrenzt ist.

Die Ventillippe 20 ist axial mittig auf der dem Vorspannring 2 radial zugewandten Seite des Dichtrings 1 angelenkt. Auf der der Anlenkung 19 axial abgewandten Seite der Ventillippe 20 ist der sich hakenförmig in radialer Richtung 4 erstreckende Zentriervorsprung 24 angeordnet, der dem kongruent gestalteten Hinterschnitt 25 des Dichtrings zugeordnet ist.

Der Druckentlastungskanal 15 umfasst den Einlass 22, der sich in axialer Richtung 8 von der Stirnseite 10 des Dichtrings radial innenseitig entlang der Ventillippe 20 bis zur Anlenkung 19 erstreckt und die Verbindungskanäle 23, die strömungsleitend mit dem Einlass 22 verbunden sind. Der kreisringförmig in sich geschlossen ausgebildete Einlass 22 ist auf seiner der einlassseitigen Stirnseite 10 axial abgewandten Seite strömungsleitend mit den Verbindungskanälen 23 verbunden, die in axialer 8 und radialer Richtung 4 ausgebildet sind und in Richtung des abzudichtenden Raums 35 aus dem Dichtring 1 austreten/in die axial abgewandte Stirnseite 9 münden.

Im gezeigten Ausführungsbeispiel gelangen drei gleichmäßig in Umfangsrichtung 21 verteilt angeordnete Verbindungskanäle 23 zur Anwendung.

In Figur 2 ist die Dichtung aus Figur 1 im eingebauten Zustand gezeigt. Die Dichtung, die in den Figuren 1 bis 6 in radialer Richtung innendichtend, also als Stangendichtung, ausgebildet ist, kann alternativ radial außendichtend ausgebildet sein und als Kolbendichtung gegen ein Zylindergehäuse 32 dichten.

In Figur 2 ist die Dichtung im drucklosen Zustand, eingebaut in der Einbaunut 30 des ersten Maschinenelements 28 gezeigt. Die Dichtung ist in radialer Richtung 4 zwischen dem ersten Maschinenelement 28 und dem zweiten Maschinenelement 29 angeordnet. Der Vorspannring 2 ist unter radialer Vorspannung zwischen dem Nutgrund 31 und dem Dichtring 1 angeordnet und drückt diesen gegen die abzudichtende Fläche des zweiten Maschinenelements 29.

Die radiale Vorspannung, mit der der Vorspannring 2 die Ventillippe 20 auf den Dichtring 1 drückt, kann derart bemessen sein, dass der Druckentlastungskanal 15 bereits bei druckloser Dichtung durch die Ventillippe 20 dicht verschlossen ist.

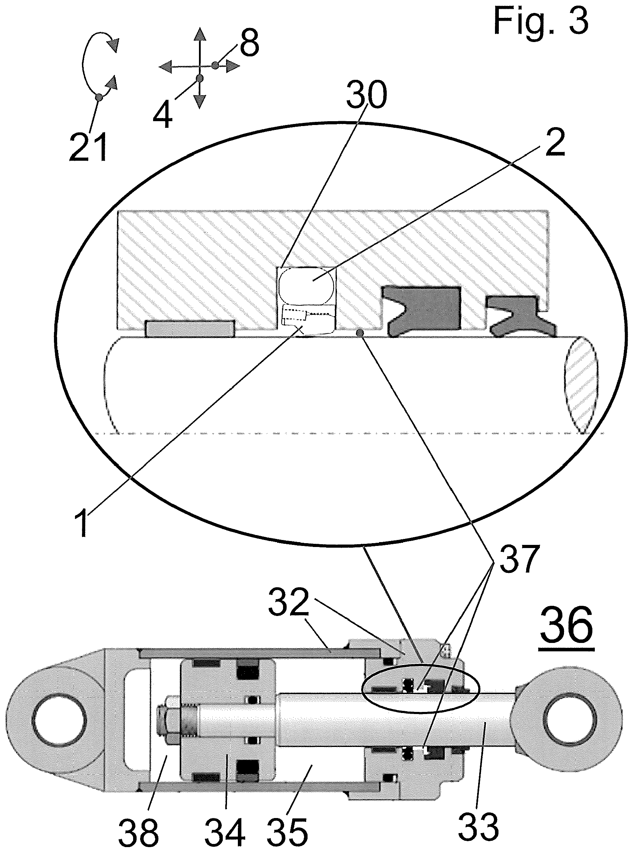

In Figur 3 ist ein konkretes Ausführungsbeispiel einer Dichtungsanordnung gezeigt, in der die zuvor beschriebene Dichtung als Primärdichtung zur Anwendung gelangt. In Figur 3 ist als Sekundärdichtung ein üblicher Nutring vorgesehen.

In Figur 4 ist der Betriebszustand der Dichtungsanordnung aus Figur 3 gezeigt, wenn im abzudichtenden Raum 35 ein relativer Überdruck, zum Beispiel in Höhe von etwa 200 bar an den Stirnseiten 9 und 11 des Dichtrings 1 und des Vorspannrings 2 anliegt, im Zwischenraum 37 demgegenüber Umgebungsdruck. Der Dichtring 1 und der Vorspannring 2 werden durch den relativen Überdruck im abzudichtenden Raum 35 axial in Richtung Umgebung 36 bewegt. Je höher der Differenzdruck an der Dichtung, desto größer ist die radiale Vorspannung, mit der der Vorspannring 2 die Ventillippe 20 auf den Dichtring 1 drückt und damit den Druckentlastungskanal 15 verschließt.

In diesem Betriebszustand ist die Hochdruckseite 13 die Seite axial in Richtung des abzudichtenden Raums 35, die Niederdruckseite 14 die Seite axial in Richtung der Umgebung 36.

In Figur 5 ist demgegenüber ein Betriebszustand dargestellt, bei dem die Kolbenstange der Dichtungsanordnung aus Figur 3 aus dem Zylindergehäuse 32 ausfährt. Dazu wird im abzudichtenden Raum 35 der Druck zum Beispiel auf den Umgebungsdruck reduziert. Der Kolben wird auf der dem abzudichtenden Raum 35 axial abgewandten Seite mit einem relativen Überdruck beaufschlagt.

Liegt im Zwischenraum 37 ein relativer Überdruck, bezogen auf den Druck im abzudichtenden Raum 35 an, beträgt die Druckdifferenz also zum Beispiel etwa 50 bar, wird die Dichtung in der Einbaunut 30 axial in Richtung des abzudichtenden Raums 35 bewegt und verpresst. Dadurch wird die radiale Vorspannung, mit der der Vorspannring 2 die Ventillippe 20 berührt, verlagert und der Druckentlastungskanal 15 freigegeben. Der Druckausgleich erfolgt mittels des Druckentlastungskanals 15 vom Einlass 22 in die Verbindungskanäle 23, wobei insbesondere die radialen Anteile der Verbindungskanal 23 dafür sorgen, dass der Druck in Richtung des abzudichtenden Raums 35 entweichen kann.

In Figur 6 ist ein zweites Ausführungsbeispiel einer Dichtung gezeigt, die sich von der Dichtung aus Figur 1 nur dadurch unterscheidet, dass anstelle von nur einem Vorspannring in Figur 1 zwei Vorspannringe 2, 3 zur Anwendung gelangen.

Die Funktionsweise unterscheidet sich nicht. Bei einer solchen Ausgestaltung ist von Vorteil, dass die Dichtung in radialer Richtung flacher baut, weil die Vorspannringe 2, 3, bezogen auf den Vorspannring 2 aus Figur 1, geringere Durchmesser aufweisen und sich trotzdem über die gesamte axiale Ausdehnung des Dichtrings 1 erstrecken. Somit können auch axial breite Einbauräume, wie sie zum Beispiel bei Nutringen verwendet werden, gut abgedichtet werden.

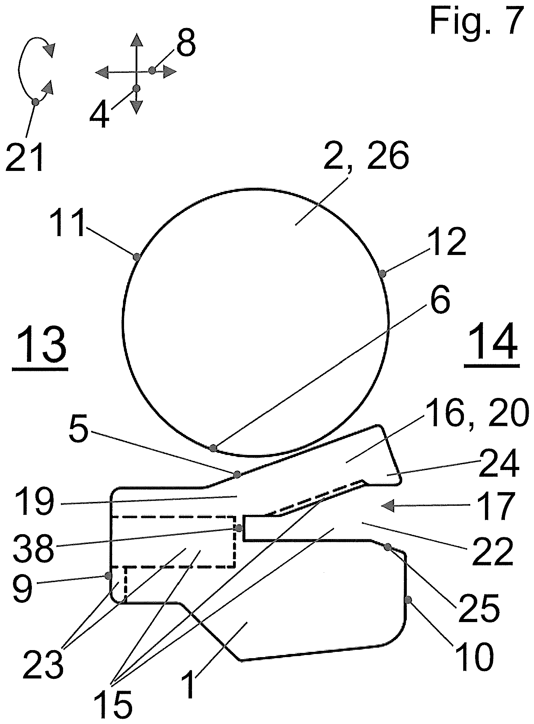

In Figur 7 ist ein drittes Ausführungsbeispiel der erfindungsgemäßen Dichtung gezeigt. Im Druckentlastungskanal 15 des Dichtrings 1, zwischen dem Einlass 22 und den Verbindungskanälen 23, ist eine Berstmembran 38 angeordnet. Herstellungsbedingt ist der Druckentlastungskanal 15 durch die Berstmembran 38 verschlossen. Bei Überschreitung eines Berstdrucks reißt die Bestmembran 38 und gibt den Druckentlastungskanal 15 frei.

Bei sehr geringen Differenzdrücken ist der Durchfluss durch den Druckentlastungskanal 15 gesperrt; erst ab einem gewissen Mindest-Differenzdruck, der zum Beispiel 50 bar beträgt, reißt die Berstmembran 38 und gibt den Druckentlastungskanal 15 frei.

## Patentansprüche

1. Dichtung, umfassend einen Dichtring (1) aus einem elastischen Kunststoff und zumindest einen Vorspannring (2, 3) aus einem gummielastischen Werkstoff, wobei der Dichtring (1) und der Vorspannring (2,3) konzentrisch zueinander angeordnet sind, sich mit ihren in radialer Richtung (4) einander zugewandten Umfangsseiten (5, 6, 7) anliegend berühren und in axialer Richtung (8) beiderseits jeweils eine Stirnseite (9, 10; 11, 12) aufweisen, die während der bestimmungsgemäßen Verwendung der Dichtung als Hoch- (13) oder Niederdruckseite (14) und als Nieder- (14) oder Hochdruckseite (13) ausgebildet sind, **und wobei** der Dichtring (1) zumindest einen sich zwischen seinen Stirnseiten (9, 10) im Wesentlichen in axialer Richtung (8) erstreckenden Druckentlastungskanal (15) aufweist, der durch einen differenzdruckbetätigbaren Ventilkörper (16) differenzdruckabhängig in Offen- (17) oder Geschlossenstellung (18) bringbar ist, **dadurch gekennzeichnet, dass** der Ventilkörper (16) durch eine in radialer Richtung (4) schwenkbeweglich um eine Anlenkung (19) mit dem Dichtring (1) verbundene Ventillippe (20) gebildet ist.

2. Dichtung nach Anspruch 1, **dadurch gekennzeichnet, dass** der Dichtring (1), die Anlenkung (19) und die Ventillippe (20) einstückig ineinander übergehend und materialeinheitlich ausgebildet sind.

3. Dichtung nach einem der Ansprüche 1 oder 2, **dadurch gekennzeichnet, dass** die Ventillippe (20) im Wesentlichen axial mittig auf der dem Vorspannring (2, 3) radial zugewandten Seite des Dichtrings (1) angelenkt ist.

4. Dichtung nach einem der Ansprüche 1 bis 3, **dadurch gekennzeichnet, dass** die Ventillippe (20) auf der dem Vorspannring (2) radial zugewandten Seite des Dichtrings (1) angeordnet ist, einen Teil der dem Vorspannring (2) radial zugewandten Umfangsseite (5) des Dichtrings (1) bildet und dass sich die Umfangsseite (5) eben, ohne sprunghafte Richtungsänderung in Umfangsrichtung (21) und axial von einer zur anderen Stirnseite (9, 10) des Dichtrings (1) erstreckt.

5. Dichtung nach einem der Ansprüche 1 bis 4, **dadurch gekennzeichnet, dass** die Ventillippe (20) auf der der Umfangsseite (5) des Dichtrings (1) radial abgewandten Seite den Druckentlastungskanal (15) begrenzt, der durch elastische Verformung der Ventillippe (20) differenzdruckabhängig und mittels des Vorspannrings (2, 3) in Offen- (17) oder Geschlossenstellung (18) bringbar ist.

6. Dichtung nach einem der Ansprüche 1 bis 5, **dadurch gekennzeichnet, dass** der Druckentlastungskanal (15) einen kreisringförmig in sich geschlossen ausgebildeten Einlass (22) und Verbindungskanäle (23) umfasst, dass der Einlass (22) sich in axialer Richtung (8) von einer Stirnseite (10) des Dichtrings (1) entlang der Ventillippe (20) bis zur Anlenkung (19) erstreckt und dass der Einlass (22) auf seiner der einlassseitigen Stirnseite (10) axial abgewandten Seite strömungsleitend mit den Verbindungskanälen (23) verbunden ist, die sich im Dichtring (1) in radialer (4) oder axialer Richtung (8) erstrecken und in die axial abgewandte Stirnseite (9) münden.

7. Dichtung nach Anspruch 6, **dadurch gekennzeichnet, dass** die Verbindungskanäle (23) gleichmäßig in Umfangsrichtung (21) verteilt im Dichtring (1) angeordnet sind.

8. Dichtung nach einem der Ansprüche 1 bis 7, **dadurch gekennzeichnet, dass** im Druckentlastungskanal (15) zwischen dem Einlass (22) und den Verbindungskanälen (23) herstellungsbedingt jeweils eine den Druckentlastungskanal (15) verschließende Berstmembran (38) angeordnet ist, die bei Überschreitung eines Berstdrucks reißt und den Druckentlastungskanal (15) freigibt.

9. Dichtung nach einem der Ansprüche 1 bis 8, **dadurch gekennzeichnet, dass** die Ventillippe (20) auf der der Anlenkung (19) axial abgewandten Seite einen sich in radialer Richtung (4) erstreckenden Zentriervorsprung (24) aufweist, der einem kongruent gestalteten Hinterschnitt (25) des Dichtrings (1) zugeordnet ist.

10. Dichtung nach einem der Ansprüche 1 bis 9, **dadurch gekennzeichnet, dass** der Vorspannring (2, 3) durch einen O-Ring gebildet ist.

11. Dichtungsanordnung, umfassend zwei konzentrisch zueinander angeordnete und translatorisch zueinander bewegliche erste und zweite Maschinenelemente (28, 29), wobei in radialer Richtung (4) zwischen den Maschinenelementen (28, 29) eine Dichtung gemäß einem der Ansprüche 1 bis 10 angeordnet ist, wobei das erste Maschinenelement (28) eine Einbaunut (30) für die Dichtung umfasst, mit einem Nutgrund (31) und wobei der zumindest eine Vorspannring (2, 3) unter radialer elastischer Vorspannung zwischen dem Nutgrund (31) und dem Dichtring (1) angeordnet ist.

12. Dichtungsanordnung nach Anspruch 11, **dadurch gekennzeichnet, dass** das erste Maschinenelement (28) ein Zylindergehäuse (32) und das zweite Maschinenelement (29) eine Kolbenstange (33) eines im Zylindergehäuse (32) translatorisch hin und her beweglichen Kolbens (34) ist.

13. Dichtungsanordnung nach Anspruch 11, **dadurch gekennzeichnet, dass** das erste Maschinenelement (28) ein Kolben (34) und das zweite Maschinenelement (29) ein den Kolben (34) außenumfangsseitig umschließendes Zylindergehäuse (32) ist.

## Claims

1. Seal comprising a sealing ring (1) composed of an elastic plastic, and comprising at least one preload ring (2, 3) composed of a rubber-elastic material, wherein the sealing ring (1) and the preload ring (2, 3) are arranged concentrically in relation to one another, are in contact in an abutting manner by way of the circumferential sides (5, 6, 7) thereof that are directed towards one another in a radial direction (4), and have on both sides in an axial direction (8) in each case one end side (9, 10; 11, 12), these end sides being configured as a high-pressure side (13), or low-pressure side (14), and as a low-pressure side (14), or high-pressure side (13), during the intended use of the seal, and wherein the sealing ring (1) has at least one pressure-relief channel (15) which extends between its end sides (9, 10) substantially in the axial direction (8) and which, by way of a differential-pressure-actuatable valve body (16), is able to be brought into an open position (17) or closed position (18) in a differential-pressure-dependent manner, **characterized in that** the valve body (16) is formed by a valve lip (20), which is connected to the sealing ring (1) so as to be pivotable in the radial direction (4) about an articulation (19).

2. Seal according to Claim 1, **characterized in that** the sealing ring (1), the articulation (19) and the valve lip (20) are formed from the same material and in a manner transitioning integrally into one another.

3. Seal according to one of Claims 1 or 2, **characterized in that** the valve lip (20) is articulated substantially axially centrally on that side of the sealing ring (1) directed radially towards the preload ring (2, 3).

4. Seal according to one of Claims 1 to 3, **characterized in that** the valve lip (20) is arranged on that side of the sealing ring (1) directed radially towards the preload ring (2) and forms a part of that circumferential side (5) of the sealing ring (1) directed radially towards the preload ring (2), and **in that** the circumferential side (5) extends in a level manner and without any abrupt directional changes in a circumferential direction (21) and axially from one end side to the other end side (9, 10) of the sealing ring (1).

5. Seal according to one of Claims 1 to 4, **characterized in that**, on the side directed radially away from the circumferential side (5) of the sealing ring (1), the valve lip (20) delimits the pressure-relief channel (15), which, by way of elastic deformation of the valve lip (20), is able to be brought into an open position (17) or closed position (18) in a differential-pressure-dependent manner and by means of the preload ring (2, 3).

6. Seal according to one of Claims 1 to 5, **characterized in that** the pressure-relief channel (15) comprises an annularly closed inlet (22) and connecting channels (23), **in that** the inlet (22) extends in the axial direction (8) from an end side (10) of the sealing ring (1) as far as the articulation (19) along the valve lip (20), and **in that**, on its side directed axially away from the inlet-side end side (10), the inlet (22) is connected in a flow-conducting manner to the connecting channels (23), which extend in the sealing ring (1) in the radial direction (4) or axial direction (8) and open out into the axially averted end side (9).

7. Seal according to Claim 6, **characterized in that** the connecting channels (23) are arranged in the sealing ring (1) so as to be distributed uniformly in the circumferential direction (21).

8. Seal according to one of Claims 1 to 7, **characterized in that**, for production reasons, there is arranged in the pressure-relief channel (15) between the inlet (22) and the connecting channels (23) in each case one rupturing membrane (38) closing off the pressure-relief channel (15), which rupturing membrane tears, and opens up the pressure-relief channel (15), in the event of a rupture pressure being exceeded.

9. Seal according to one of Claims 1 to 8, **characterized in that**, on the side directed axially away from the articulation (19), the valve lip (20) has a centring projection (24) which extends in the radial direction (4) and which is assigned to a congruently formed undercut (25) of the sealing ring (1) .

10. Seal according to one of Claims 1 to 9, **characterized in that** the preload ring (2, 3) is formed by an 0-ring.

11. Sealing arrangement comprising two first and second machine elements (28, 29) which are arranged concentrically in relation to one another and are movable translationally in relation to one another, wherein a seal according to one of Claims 1 to 10 is arranged between the machine elements (28, 29) in a radial direction (4), wherein the first machine element (28) comprises an installation groove (30), having a groove base (31), for the seal, and wherein the at least one preload ring (2, 3) is arranged between the groove base (31) and the sealing ring (1) so as to be subjected to radial elastic prestressing.

12. Sealing arrangement according to Claim 11, **characterized in that** the first machine element (28) is a cylinder housing (32), and the second machine element (29) is a piston rod (33) of a piston (34) which is movable translationally back and forth in the cylinder housing (32).

13. Sealing arrangement according to Claim 11, **characterized in that** the first machine element (28) is a piston (34), and the second machine element (29) is a cylinder housing (32) which surrounds the piston (34) on an outer circumferential side.

## Revendications

1. Joint d'étanchéité, comprenant une bague d'étanchéité (1) en une matière plastique élastique et au moins une bague de précontrainte (2, 3) en un matériau ayant l'élasticité du caoutchouc, la bague d'étanchéité (1) et la bague de précontrainte (2, 3) étant agencées de manière concentrique l'une par rapport à l'autre, se touchant de manière adjacente avec leurs côtés périphériques (5, 6, 7) tournés l'un vers l'autre dans la direction radiale (4) et présentant des deux côtés dans la direction axiale (8) respectivement un côté frontal (9, 10 ; 11, 12) qui, pendant l'utilisation conforme du joint d'étanchéité, sont configurés comme côté haute (13) ou basse pression (14) et comme côté basse (14) ou haute pression (13), et la bague d'étanchéité (1) présentant au moins un canal de décharge de pression (15) s'étendant entre ses côtés frontaux (9, 10) essentiellement dans la direction axiale (8), qui peut être amené en position ouverte (17) ou fermée (18) en fonction de la pression différentielle par un corps de soupape (16) actionnable par la pression différentielle, **caractérisé en ce que** le corps de soupape (16) est formé par une lèvre de soupape (20) reliée à la bague d'étanchéité (1) de manière à pouvoir pivoter dans la direction radiale (4) autour d'une articulation (19).

2. Joint d'étanchéité selon la revendication 1, **caractérisé en ce que** la bague d'étanchéité (1), l'articulation (19) et la lèvre de soupape (20) sont réalisées d'une seule pièce, se fondant l'une dans l'autre et dans le même matériau.

3. Joint d'étanchéité selon l'une quelconque des revendications 1 ou 2, **caractérisé en ce que** la lèvre de soupape (20) est articulée essentiellement axialement au centre sur le côté de la bague d'étanchéité (1) qui est tourné radialement vers la bague de précontrainte (2, 3).

4. Joint d'étanchéité selon l'une quelconque des revendications 1 à 3, **caractérisé en ce que** la lèvre de soupape (20) est agencée sur le côté de la bague d'étanchéité (1) tourné radialement vers la bague de précontrainte (2), forme une partie du côté périphérique (5) de la bague d'étanchéité (1) tourné radialement vers la bague de précontrainte (2) et **en ce que** le côté périphérique (5) s'étend à plat, sans changement brusque de direction dans la direction périphérique (21) et axialement d'un côté frontal à l'autre (9, 10) de la bague d'étanchéité (1).

5. Joint d'étanchéité selon l'une quelconque des revendications 1 à 4, **caractérisé en ce que** la lèvre de soupape (20) délimite, sur le côté détourné radialement du côté périphérique (5) de la bague d'étanchéité (1), le canal de décharge de pression (15) qui peut être amené en position ouverte (17) ou fermée (18) par déformation élastique de la lèvre de soupape (20) en fonction de la pression différentielle et au moyen de la bague de précontrainte (2, 3).

6. Joint d'étanchéité selon l'une quelconque des revendications 1 à 5, **caractérisé en ce que** le canal de décharge de pression (15) comprend une entrée (22) réalisée fermée sur elle-même en forme d'anneau circulaire et des canaux de liaison (23), **en ce que** l'entrée (22) s'étend dans la direction axiale (8) depuis un côté frontal (10) de la bague d'étanchéité (1) le long de la lèvre de soupape (20) jusqu'à l'articulation (19) et **en ce que** l'entrée (22) est reliée de manière à guider l'écoulement sur son côté détourné axialement du côté frontal (10) côté entrée avec les canaux de liaison (23) qui s'étendent dans la bague d'étanchéité (1) dans la direction radiale (4) ou axiale (8) et débouchent dans le côté frontal (9) détourné axialement.

7. Joint d'étanchéité selon la revendication 6, **caractérisé en ce que** les canaux de liaison (23) sont agencés en étant répartis uniformément dans la direction périphérique (21) dans la bague d'étanchéité (1).

8. Joint d'étanchéité selon l'une quelconque des revendications 1 à 7, **caractérisé en ce que** dans le canal de décharge de pression (15), entre l'entrée (22) et les canaux de liaison (23), est agencée, en raison de la fabrication, respectivement une membrane d'éclatement (38) fermant le canal de décharge de pression (15), qui se rompt en cas de dépassement d'une pression d'éclatement et libère le canal de décharge de pression (15) .

9. Joint d'étanchéité selon l'une quelconque des revendications 1 à 8, **caractérisé en ce que** la lèvre de soupape (20) présente, sur le côté détourné axialement à l'articulation (19), une saillie de centrage (24) s'étendant dans la direction radiale (4), qui est associée à une contre-dépouille (25) de forme congruente de la bague d'étanchéité (1).

10. Joint d'étanchéité selon l'une quelconque des revendications 1 à 9, **caractérisé en ce que** la bague de précontrainte (2, 3) est formée par un joint torique.

11. Agencement d'étanchéité, comprenant deux premier et deuxième éléments de machine (28, 29) agencés concentriquement l'un par rapport à l'autre et mobiles en translation l'un par rapport à l'autre, un joint d'étanchéité selon l'une quelconque des revendications 1 à 10 étant agencé dans la direction radiale (4) entre les éléments de machine (28, 29), le premier élément de machine (28) comprenant une rainure de montage (30) pour le joint d'étanchéité, avec un fond de rainure (31), et l'au moins une bague de précontrainte (2, 3) étant agencée sous précontrainte élastique radiale entre le fond de rainure (31) et la bague d'étanchéité (1).

12. Agencement d'étanchéité selon la revendication 11, **caractérisé en ce que** le premier élément de machine (28) est un boîtier de cylindre (32) et le deuxième élément de machine (29) est une tige de piston (33) d'un piston (34) mobile en translation en va-et-vient dans le boîtier de cylindre (32).

13. Agencement d'étanchéité selon la revendication 11, **caractérisé en ce que** le premier élément de machine (28) est un piston (34) et le deuxième élément de machine (29) est un boîtier de cylindre (32) entourant le piston (34) sur sa périphérie extérieure.
